Europäisches Patentamt

European Patent Office

Office européen des brevets

(19)

(11) Publication number: **0 055 786**

**A1**

(12)

# EUROPEAN PATENT APPLICATION

(21) Application number: **80108253.8**

(22) Date of filing: **30.12.80**

(51) Int. Cl.³: **B 01 J 20/34**
**B 01 D 53/02, C 01 B 31/08**

(43) Date of publication of application:
14.07.82 Bulletin 82/28

(84) Designated Contracting States:
AT BE CH DE FR GB IT LI LU NL SE

(71) Applicant: KINNERET ENTERPRISES LIMITED
Alexandra House, 7th Floor Chater Road
Hong Kong(HK)

(72) Inventor: Lloyd, Robert
7 Karalee Road
Galston New South Wales 2159(AU)

(72) Inventor: Turner, Maxwell James
138A, Kangaroo Point Road Kangaroo Point
Sylvania New South Wales 2224(AU)

(74) Representative: Baillie, Iain Cameron et al,
c/o Ladas & Parry Isartorplatz 5
D-8000 München 2(DE)

(54) Process for treating contaminated activated carbon.

(57) A process for the regeneration of contaminated activated carbon is provided. The process utilises hydrogen fluoride gas and aqueous hydrogen fluoride to gasify and solubilize the now carbonaceous contaminants. The hydrogen fluoride is regenerated for recycle. The process provides for activated carbon to be economically used for cleaning of flue gases, particularly gases generated by combustion of hydrocarbon.

EP 0 055 786 A1

## "CLEANING OF FLUE GASES"

This invention relates to a method of cleaning activated carbon particularly when used for cleaning flue gases, in particular flue gases from hydrocarbon-burning plants.

Flue gases from combustion chambers generally contain particulate solids and various gases, some of which are unacceptable for emission into the atmosphere. Typical gases of this kind are the nitrogen oxides, carbon oxides and sulphur oxides.

It is well known that activated carbon having an extremely high surface area due to the porous nature of the particles, is capable of absorbing onto its surface and into its pores, gases and solid particles.

The problem with activated carbon as a gas cleaning composition is that it is very expensive. Thus once it has been in use for a relatively short period of time and its efficiency drops due to absorption onto its surface of a layer of flue gas matter, its efficiency decreases to the extent where it does not retain sufficient matter from the flue gases to be of any further effect.

Activated carbon generally is very expensive to reactivate once it has been used or may not be reactivated at all, depending upon the nature of the material attached to the surface of the carbon.

It is an object of this invention to provide a method of reactivating used activated carbon so that it may be re-used.

In one broad form the invention provides a process of treating a contaminated activated carbon bed cointaining oxides of silica, aluminium, sulphur, nitrogen and reactive elements and their compounds, comprising: treating said contaminated activated carbon bed by:

(i)  forcing air through the activated carbon bed in the reverse direction to the in use flow direction through said bed to remove fine particulate solids which have lodged in said bed;

(ii)  passing hydrogen fluoride gas through said bed wherein it converts silica, alumina or sulphur compounds to their respective fluoride compounds;

(iii) removing gases produced in the hydrogen fluoride treatment and separating hydrogen fluoride from the heavier gases;

(iv) heating said heavier gases to a temperature from $220^{O}F$ to $260^{O}F$ at a pressure from 60 to 100 PSIG;

(v) contacting said heated gas with liquid water wherein any sulphur compounds are converted to crystalline sulphur, precipitated and separated;

(vi) heating the gaseous stream following said water treatment to a temperature from 500 to $900^{O}F$;

(vii) contacting said gases with water at 60 to 100 PSIG and $220^{O}F$ to $260^{O}F$ to convert the fluoride compounds to solids and regenerate hydrogen fluoride gas; and

(viii) washing said activated carbon bed to purge it of hydrogen fluoride.

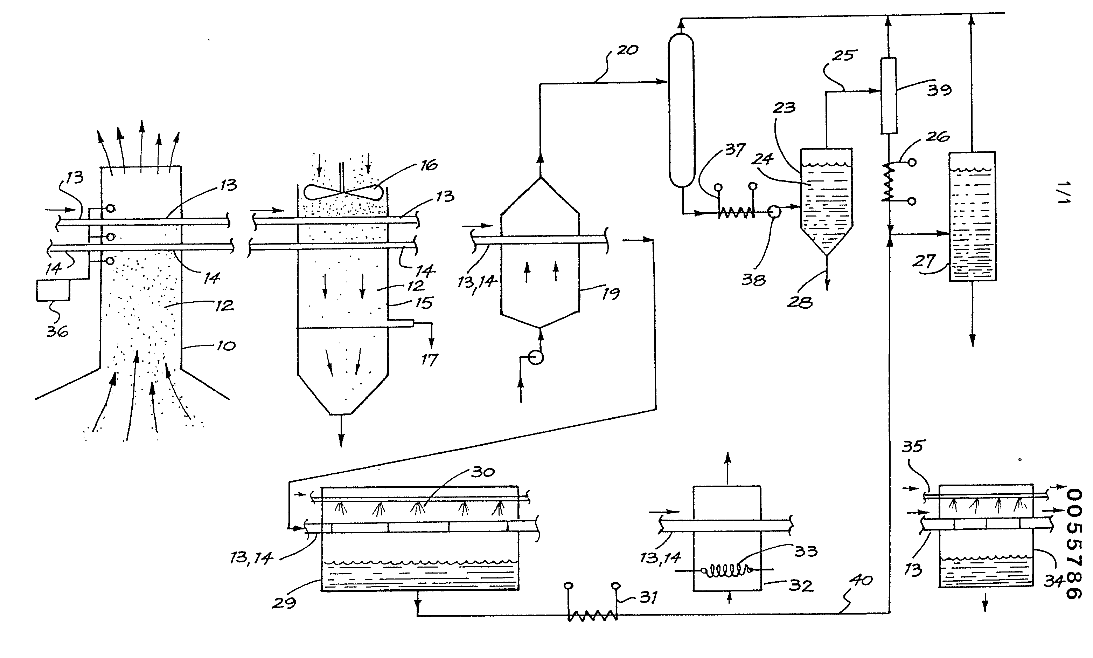

The invention will now be described by way of example only with reference to the accompanying drawing, wherein there is shown a flow sheet of the process of the invention.

As shown from the flow sheet combustion flue gases 11 are fed through a flue 10. The flue gases 11 contain particulate solids 12 as well as various pollutant gases which are required to be substantially removed from the gas stream prior to discharge into the atmosphere 15.

A filter 14 comprising a frame containing activated carbon particles is placed across the flue 10 so that all the gas passing through the flue must pass through the filter 14. There may be two or more banks of filters, (13 and 14). The second bank is a back-up to the first bank to provide additional filtering. Any number of banks of these filters may be used in series.

As the activated carbon cleans the flue gases 11, various particles 12 and pollutant gases are absorbed to the surface of the activated carbon and trapped in interstices of the filter. As this occurs the available surface area of the activated carbon is reduced and the efficiency of the filter drops. This drop in efficiency is accompanied by an increased pressure gradient across the filters. Control means 36 register the pressure increase and signal drive

- 3 - **0055786**

means to remove the filters 13 and 14 from their position across the flue and move them to a cleaning cycle. At the same time new filters are brought into operation in the flue 10.

The filters 13 and 14 which have been removed from the flue are then cleaned by first passing to a reverse flow air chamber 15 wherein a fan 16 blows air through the filters in the opposite direction to that which flue gases flowed whilst the filter was in use in the flue. This treatment dislodges any loose particulate solids which are collected and removed for disposal. The filter 14 then passes into an enclosed reaction chamber 19 wherein hydrogen fluoride gas is contacted with the activated carbon in the filter by blowing the gas through the frame at a temperature from $32^{\circ}F$ to $300^{\circ}F$. The hydrogen fluoride gas reacts with the silica and sulphur compounds to convert them to gaseous fluorides. The gas also reacts with alumina and other mineral oxides to convert them to mineral fluorides. The gases are passed from the reaction chamber 19 through line 20 to a gas separation chamber 18 wherein the lighter hydrogen fluoride separates out and removed for recycle 21 and the heavier gases comprising the sulphur and silicon fluorides (preferably in tetrafluoride form) are removed at the bottom of the chamber. The silicon and sulphur fluoride gases are then heated 37 to a temperature from $220^{\circ}F$ to $260^{\circ}F$ and compressed by compressor 38 to a temperature of from 60 to 100 PSIG and contacted with liquid water at a similar temperature and pressure in vessel 23 wherein any sulphur which is present in a fluoride form is converted to crystalline sulphur, precipitates out and is removed 28. Hydrogen fluoride is reformed from the fluoride released from the sulphur and, as it has a low solubility at the temperature of the system, it is passed off in gaseous form with the silicon fluorides and steam. The gas then leaves the water contacting chamber 23 and passes through line 25 through a gas density separator 39 wherein the hydrogen fluoride gas is removed. The remaining silicon fluoride-water vapour gas is heated to a temperature of from 500 to $900^{\circ}F$ before being passed into a further water contacting chamber which is maintained at a pressure of from 60 to 100 PSIG and from $200^{\circ}$F to $260^{\circ}$F. This treatment converts the silicon fluorides to solids wherein they precipitate out and hydrogen fluoride is reformed from the water chamber 27 as a gas for reuse.

The filter frames 13, 14 after leaving the reaction chamber 19 pass through a hydrogen fluoride acid spray chamber 30 which saturates the activated carbon to react with any remaining aluminium and other mineral compounds to convert same to various soluble fluoride compounds. The acid is of a concentration adjusted according to the solubility of the various fluoride compounds still contained in the matrix of the activated carbon. The acid wash liquor is removed from the chamber 29, heated 39 to a temperature from $200^{\circ}$F to $260^{\circ}$F at a pressure of from about 60 to 100 PSIG and passed 40 to the chamber 27 wherein due to solubility changes the hydrogen fluoride is removed and the fluoride compounds are precipitated out.

If it is desired to keep to various solid fluoride precipitates (mainly aluminium and silicon fluorides) separate, the liquid stream 40 would be passed to a separate contacting stage (not shown) having the same temperature and pressure characteristics as the stage 27.

The filter frames 13, 14 then leave the chamber 29 and pass to a gas purging chamber 32 wherein compressed air is forced through the frames 14 to remove the bulk of the hydrogen fluoride. This is aided by heating the air to a temperature of about $240^{\circ}$F so that the hydrogen fluoride in the moisture will be converted to the gaseous form and can be removed for recycle.

In order to avoid any residual fluorides being emitted in the flue gas stream 15, the back-up set of filters 13 are passed to a further pretreatment stage 34. The final treatment stage 34 comprises back washing the filter 13 with lime water. The lime water will deposit a thin layer of lime on the surface of the activated carbon of the filters. The lime being attached to the surface of the activated carbon will not be removed by the gas. Any fluorides present will react directly with the calcium to form calcium fluorides which are harmless solids. Alternatively, the back-up filter 13 could be made up of a

- 5 -                    **0055786**

porous calcium carbonate filter which will ensure that any fluorine escaping the cleaning process would be converted to calcium fluoride.

It is by these means that flue gases containing a normally unacceptably high level of $NO_x$ and $SO_x$ and sulphur compounds can be treated.

CLAIMS

"CLEANING OF FLUE GASES"

1.   A process of treating contaminated activated carbon bed cointaining oxides of silica, aluminium, sulphur, nitrogen and reactive elements and their compounds, comprising:   treating said contaminated activated carbon bed by:

(i)   forcing air through the activated carbon bed in the reverse direction to the in use flow direction through said bed to remove fine particulate solids which have lodged in said bed;

(ii)   passing hydrogen fluoride gas through said bed wherein it converts silica, alumina or sulphur compounds to their respective fluoride compounds;

(iii)   removing gases produced in the hydrogen fluoride treatment and separating hydrogen fluoride from the heavier gases;

(iv)   heating said heavier gases to a temperature from $220^{\circ}F$ to $260^{\circ}F$ at a pressure from 60 to 100 PSIG;

(v)   contacting said heated gas with liquid water wherein any sulphur compounds are converted to crystalline sulphur, precipitated and separated;

(vi)   heating the gaseous stream following said water treatment to a temperature from 500 to $900^{\circ}F$;

(vii)   contacting said gases with water at 60 to 100 PSIG and $220^{\circ}F$ to $260^{\circ}F$ to convert the fluoride compounds to solids and regenerate hydrogen fluoride gas; and

(viii)   washing said activated carbon bed to purge it of hydrogen fluoride.

2.   The process of claim 1 wherein said activated carbon bed contained within a frame of a flue gas filter.

3.   The process of claim 2 wherein said flue gases are produced by hydrocarbon burning plants.

4.   The process of claim 2 wherein the activated carbon bed of said filter, following step (i) of said process, is -

(a)   treated with aqueous hydrogen fluoride to react with any aluminium and other remaining metal compounds to convert them to soluble fluorides;

(b) heating the metal fluoride compound solution to a temperature from 220°F to 260°F at a pressure of from about 60 to 100 PSIG to precipitate fluoride compounds and generate hydrogen fluoride gas.

5. The process of claim 4 wherein following the heating stage of step (b) the liquor is contacted with the gaseous stream of step (vii) of claim 1.

6. The process of claim 4, wherein said filters following step (a) are purged by an air flow.

7. The process of claim 4 wherein the hydrogen fluoride gas regenerated at various points of the process is recycle for use in step (i).

8. The process of claim 1 wherein said filters prior to step (i) are located in a flue, and wherein pressure gradient control sensing means are provided to identify the pressure gradient across said filters and signal means to remove and replace said filter at a predetermined pressure drop across said filter; and means to transfer said filter to step (i) of said process.

9. The process of claim 8 wherein a secondary activated carbon filter is disposed in said flue downstream of said first filter and said secondary filter being monitored and cleaned in the same manner as said first mentioned filter; and said secondary filter following step (a) of claim 4 is washed with a calcium salt solution to provide a calcium salt coating on said activated carbon.

10. The process of claim 9 wherein said calcium salt is calcium carbonate.

11. The process of claim 1 wherein following treatment in said process the activated carbon filter is re-used.

**0055786**

European Patent Office

**EUROPEAN SEARCH REPORT**

Application number

EP 80 10 8253

| Category | Citation of document with indication, where appropriate, of relevant passages | Relevant to claim |
|---|---|---|
| | DE - C - 412 850 (J.N.A. SAUER) <br> * Page 1, lines 1-68 * <br><br> ---- | 1 |

**DOCUMENTS CONSIDERED TO BE RELEVANT**

**CLASSIFICATION OF THE APPLICATION (Int. Cl.3)**

B 01 J 20/34
B 01 D 53/02
C 01 B 31/08

**TECHNICAL FIELDS SEARCHED (Int. Cl.3)**

B 01 J 20/00
B 01 D 53/00
C 01 B 31/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family.
corresponding document

The present search report has been drawn up for all claims

| Place of search | Date of completion of the search | Examiner |
|---|---|---|
| The Hague | 03-09-1981 | BOGAERTS |

EPO Form 1503.1  06.78